# EUROPÄISCHE PATENTSCHRIFT

(11) **EP 4 166 588 B1**
(45) Veröffentlichungstag und Bekanntmachung des Hinweises auf die Patenterteilung: **20.08.2025**
(21) Anmeldenummer: 21202715.5
(22) Anmeldetag: 14.10.2021
(51) Int. Cl.: C08G 18/75, C09D 4/06, G01N 1/30, C09D 4/00, C08L 75/04

(54) **UV-HÄRTBARE EINDECKMITTEL FÜR DIE TAUCHAPPLIKATION**
UV-CURABLE ENCAPSULANT FOR IMMERSION APPLICATION
MOYEN DE RECOUVREMENT DURCISSABLE AUX UV POUR LES APPLICATIONS DE PLONGÉE

(43) Veröffentlichungstag der Anmeldung: 19.04.2023
(73) Patentinhaber: ORSAtec GmbH, 86399 Bobingen (DE)
(72) Erfinder: SCHMID, Alexander, 85716 Unterschleißheim (DE)
(74) Vertreter: Stolmár & Partner Patentanwälte PartG mbB

(56) Entgegenhaltungen:
- WO-A2-2008/045517
- KR-A- 20210 010 340
- US-A1- 2016 333 203
- US-A1- 2020 391 535

## Beschreibung

Eindeckmittel werden in der Biologie und Medizin, insbesondere in den Bereichen der Histologie, Histochemie, Immunologie und Cytochemie, benötigt, um biologische Proben für die Mikroskopie zu fixieren und für einen längeren Zeitraum haltbar zu machen. Üblicherweise werden dabei die Proben, z.B. Gewebe-, Blutproben oder Zellmaterial, zunächst auf einen Objektträger gegeben und dann mit einem Deckglas abgedeckt. Damit sich Objektträger und Deckglas nicht gegeneinander verschieben, wird das Deckglas mit einem Eindeckmittel auf dem Objektträger fixiert. Dies verbessert zum einen die Handhabbarkeit, und gleichzeitig kann die fixierte Probe für viele Jahre aufbewahrt werden, ohne dass es zur Zersetzung kommt, da die Probe in dem Eindeckmittel eingebettet und damit vor Feuchtigkeit, Sauerstoff und Lichteinwirkung geschützt ist.

Daher sollte ein Eindeckmittel möglichst schnell aushärten und nach der Aushärtung weder mit der Probe selbst noch mit äußeren Einflüssen wie Wasser oder Alkohol reagieren. Zudem sollte das Eindeckmittel nach dem Aushärten transparent sein und einen zum verwendeten Deckglas vergleichbaren Brechungsindex aufweisen.

Der Gold-Standard zum Fixieren von Mikroskopie-Proben ist "EUKITT^{®}" (ORSAtec, Deutschland), ein Xylol-basiertes Eindeckmittel. Es härtet schnell aus, ist vollkommen transparent und zeichnet sich durch einen geringen Schwund beim Aushärtevorgang aus. Nachteilig ist die Verwendung von Xylol, welches in kleineren Mengen bei Inhalation toxische Wirkungen zeigt und deswegen das Tragen einer Schutzmaske bei der Präparation der Proben notwendig macht.

Weitere aus dem Stand der Technik bekannte Eindeckmittel verwenden statt Xylol Limonen, das allerdings auch nicht frei von unerwünschten Eigenschaften (Hautreizung, Eigengeruch) ist.

Eine dritte Gruppe von Eindeckmitteln basiert auf UV-härtbaren Polyacrylaten und/oder Acrylatoligomeren. Diese bieten den Vorteil, dass das eingedeckte Präparat nach kurzer UV-Bestrahlung schnell mit einer schützenden Schicht aus Polyacrylat umgeben ist.

Weiterentwickelte UV-härtbare Eindeckmittel werden z.B. in der DE 10 2016 009 908 A1 und in der WO 2019/110078 A1 beschrieben. Die DE-Schrift offenbart UV-härtbare Formulierungen umfassend ein aliphatisches Urethanacrylat, ein kurzkettiges Acrylatoligomer und einen Photopolymersations-Initiator (Fotoinitiator). Die WO-Schrift bezieht sich ebenfalls auf UV-härtbare Zusammensetzungen, welche ein kurzkettiges Acrylatoligomer und einen Fotoinitiator umfassen. Die dort genannten Formulierungen werden wie eingangs beschrieben als Eindeckmittel in Verbindung mit einem Deckglas verwendet.

Weiterhin sind im Stand der Technik Eindeckmittel bekannt, welche durch Tauchapplikation auf einen Objektträger aufgebracht werden und bei denen auf die Verwendung eines Deckglases verzichtet werden kann (WO 2020/026002 A1). Die dort beschriebenen Eindeckformulierungen umfassen eine flüssige Komponente wie Xylol oder Ethylacetat, ein oder mehrere Polymere oder Copolymere wie Cellulosediacetat, - triacetat oder -proprionat. In diesen Formulierungen werden die, wie eingangs beschrieben, unerwünschten Lösungsmittel oder VOC (volatile organic compounds) verwendet. Der Vorgang der Tauchapplikation muss unter Umständen mehrfach wiederholt werden, und an die Tauchapplikation schließt sich eine Trocknungsphase an der Luft oder unter Einsatz geeigneter Hilfsmittel an, die relativ viel Zeit in Anspruch nimmt.

Daraus ergibt sich, dass durchaus und nach wie vor ein Verbesserungsbedarf bei solchen Eindeckmitteln besteht. Die Aufgabe der vorliegenden Erfindung besteht somit in der Verwendung von Eindeckformulierungen, die bei verbesserten Eigenschaften (wie z.B. Licht- und Chemikalienbeständigkeit, optische Eigenschaften wie z.B. Brechungsindex) eine möglichst einfache und effiziente Herstellung, Verarbeitung und Applikation gewährleisten. Zumindest sollten einige der genannten Eigenschaften und Parameter verbessert werden.

Gelöst wird diese Aufgabe durch die Verwendung eines Eindeckmittels (oder einer Eindeckformulierung), welches die folgenden Komponenten umfasst:
a) ein kurzkettiges Acrylatoligomer, das mono- oder multifunktional sein kann,
b) ein reaktives Amin-Additiv oder/und
c) ein reaktives Thiol-Additiv oder/und
d) ein reaktives Ether-Additiv oder/und
e) ein Hybrid-Silicon Additiv und
f) einen Photopolymerisationsinitiator (Fotoinitiator).

In einer solchen Eindeckformulierung übernehmen die Komponenten b) - d) die Funktion eines sog. H-Donors, während die Komponente e) als sog. Leveler und Sauerstoffbarriere während der Polymerisation dient.

Das offenbarte Eindeckmittel selbst ist nicht Teil der vorliegenden Erfindung.

Die Komponenten a) bis f) können auch aus verschiedenen Substanzen des jeweils genannten Typs bestehen. Die Gehaltsangaben für diese Komponenten in der fertigen Formulierung beziehen sich dann auf die Summe der jeweiligen Substanzen eines Typs.

Bei den verwendeten Eindeckformulierungen sind 3-er oder 4-er Kombinationen bevorzugt. Da diese Formulierungen die Komponenten a) und f) zwingend enthalten, sind ferner bevorzugt die Komponenten b), c), d) oder e) einfach oder zweifach vertreten. Dabei kann wie ausgeführt, eine Komponente auch durch mehrere Verbindungen des entsprechenden Typs vertreten sein. Insbesondere bevorzugt sind die Kombinationen a), d) und f); a), c), e) und f); a), d), e) und f).

Das offenbarte Eindeckmittel umfasst ein kurzkettiges Acrylatoligomer. Darunter wird für die Zwecke der vorliegenden Erfindung ein Acrylatoligomer mit einer Kettenlänge von bevorzugt 2 - 9 Acrylsäureeinheiten (Monomeren) verstanden, wobei grundsätzlich alle Kettenlängen, d.h. Ketten bestehend aus 2, 3, 4, 5, 6, 7, 8 und 9 Monomeren geeignet sind, ganz besonders bevorzugt sind Oligomere, welche aus 3 - 8 Monomeren bestehen. Diese Acrylatoligomere können Seitenketten aufweisen, die ebenfalls mit gesättigten oder ungesättigten, verzweigten, unverzweigten oder cyclischen aliphatischen Resten modifiziert sind. Im Rahmen der Erfindung ist auch die Verwendung von multifunktionalen, kurzkettigen Acrylatoligomeren vorgesehen, d.h. von AcrylatVerbindungen mit mehr als einer Acryl-Gruppe. In einer weiteren bevorzugten Ausführungsform umfasst das kurzkettige Acrylatmonomer drei oder mehr Acryl-Gruppen (Monomere), insbesondere genau drei Acryl-Gruppen (Monomere).

Das Molekulargewicht des verwendeten kurzkettigen Acrylatoligomers beträgt bevorzugt zwischen etwa 150 und etwa 1000 g/mol, insbesondere zwischen etwa 300 und etwa 800 g/mol, besonders bevorzugt zwischen etwa 450 und etwa 600 g/mol, wobei die genannten Zahlenangaben auch ohne die Voranstellung von "etwa" von der Erfindung umfasst sind.

Zur Molekulargewichtsbestimmung wird die Methode GPC-MS verwendet.

Als kurzkettiges Acrylatoligomer können auch kommerziell erhältliche Produkte eingesetzt werden. Als Beispiel seien genannt: Ebecryl LEO 10501 (CAS No. 28961-43-5), Ebecryl 130 (CAS No. 42594-17-2), Ebecryl 140 (CAS No. 94108-97-1), Ebecryl 150 oder 160, Ebecryl 113 (CAS No. 94624-09-6) oder 114 (CAS No. 48145-04-6), Ebecryl 11 oder HDDA (1,6-Hexandiol-diacetat) (CAS No. 13048-33-4) (Hersteller/Anbieter: Allnex, Belgien). Bevorzugt sind dabei Ebecryl LEO 10501, Ebecryl 113 und 114, Ebecryl 11 und HDDA.

Das im Rahmen der vorliegenden Erfindung verwendete Eindeckmittel umfasst etwa 1 bis etwa 98 %, bevorzugt etwa 20 bis etwa 98 %, und insbesondere etwa 90 bis etwa 98 % des kurzkettigen Acrylatoligomers.

Hier und im Folgenden bedeutet die %-Angabe jeweils Gewichtsprozent bezogen auf die fertige Zusammensetzung oder Formulierung, und die konkreten Zahlenwerte hinter dem Wort "etwa" geben für sich genommen (ohne das Wort "etwa") ebenfalls konkrete Inhaltsbereiche an.

Die Acrylatoligomere können mono- oder multifunktional, insbesondere bi- oder trifunktional sein. Diese vorhandenen zusätzlichen Acrylgruppen können das Polymersationsverhalten der verwendeten Eindeckzusammensetzungen maßgeblich beeinflussen, da in den Fällen der Multifunktionalität verstärkt crosslinking zwischen den Oligomeren auftritt.

Als Fotoinitiatoren kommen alle Verbindungen in Betracht, die bei UV-Bestrahlung Radikale bilden. Dazu gehören z.B. Verbindungen aus der Gruppe der Acetophenone, der Benzil- oder Benzoin-Verbindungen, der Mono- oder Bis-acyl phosphinoxide , der Benzophenone, kationischen Fotoinitiatoren oder der Thioxanthone. Diese Substanzen können allein oder in Kombination miteinander verwendet werden.

Als Fotoinitiatoren können kommerziell erhältliche Produkte allein oder in Kombination eingesetzt werden. Geeignete Beispiele hierfür sind: Omnirad 184 (CAS No. 947-19-3), Omnirad 1173 (CAS No. 7473-98-5), Omnirad 2959 (CAS No. 106797-53-9), Omnirad 819 (CAS No. 162881-26-7), Omnirad MBF (CAS No. 15206-55-0) oder TPO (CAS No. 75980-60-8) bzw. TPO-L (CAS No. 84434-11-7) (alle Produkte/Marken erhältlich von IGM Resins, Niederlande. IGM hat die Produktion der Fotoinitiatoren für die Produkte unter der Marke Irgacure von der BASF übernommen. Auch die entsprechenden BASF-Produkte sind für diese Zwecke geeignet.). Bevorzugt ist Omnirad 1173 in Kombination mit Omnirad 819, besonders bevorzugt ist Omnirad 1173.

Die im Rahmen der Erfindung verwendeten Eindeckmittel enthalten den oder die Fotoinitiatoren bevorzugt von etwa 0,1 bis etwa 20 %, insbesondere von etwa 0,5 bis etwa 10 %, und besonders bevorzugt von etwa 0,5 bis etwa 5 %. Eine speziell an die jeweilige Eindeckzusammensetzung angepasste Menge an Fotoinitiatoren kann die Polymerisationszeit und Haltbarkeit der Zusammensetzung verbessern und eine unerwünschte Polymerisation vor der eigentlichen Anwendung der Zusammensetzung vermeiden. Daher offenbaren die genannten Inhaltsbereiche auch einzelne, konkrete %-Angaben in Schritten von 0,1 % innerhalb dieser Bereiche.

In einer bevorzugten Ausführungsform ist der Fotoinitiator ein kurz- oder eir langwelliger Fotoinitiator oder ein Gemisch davon. Durch Einsatz von Fotoinitiatoren, die auf UV-Licht verschiedener Wellenlänge reagieren, kann das Eindeckmittel an verschiedene Einsatzgebiete und UV-Quellen angepasst werden. Durch den Einsatz eines Gemisches an Fotoinitiatoren, die auf UV-Licht unterschiedlicher Wellenlänge reagieren, kann sichergestellt werden, dass das Eindeckmittel unter Einsatz verschiedener UV-Quellen ohne Änderung der Formulierung polymerisiert werden kann.

Bei der Bereitstellung der verwendeten Eindeckmittel wurde gefunden, dass, um das Problem der Hemmung der radikalischen Polymerisation durch molekularen Sauerstoff im Grundzustand, der eine unvollständige Härtung verursacht und im Allgemeinen zu einer verminderten mechanischen Leistung und klebrigen Oberflächen bei den erhaltenen Eindeckmitteln führt, zu beheben, zu den UV-härtbaren Rezepturen sog. H-Donoren als Synergisten zugesetzt werden können. Diese Substanzen sind in der Lage die reaktionsträgen Peroxyl-Radikale, die durch den Kontakt der Starter-Radikale oder der reaktiven Kettenradikale mit Luftsauerstoff entstanden sind, in reaktivere Spezies umzuwandeln, indem ein H-Radikal abstrahiert wird.

Geeignet als H-Donoren sind offenkettige als auch cyclische, monomere als auch oligo- oder polymere Amine, Thiole und Ether.

Als copolymersierbare Amin-Additive können auch kommerziell erhältliche Produkte eingesetzt werden. Als Beispiel seien genannt: Ebecryl 80, Ebecryl 81, Ebecryl 85, Ebecryl P115 oder P116, Ebecryl 83, oder Ebecryl 7100 (CAS No. 13048-33-4) oder Ebecryl LEO 10553 (Hersteller/Anbieter: Allnex, Belgien) bzw. CN 386 (Hersteller/Anbieter Sartomer, Frankreich), Dynasylan AMMO (CAS No. 13822-56-5), Dynasylan TRIAMO (CAS No. 35141-30-1) und Dynasylan DAMO (CAS No. 1760-24-3) (Hersteller/Anbieter Evonik, Deutschland). Bevorzugt sind dabei Ebecryl 85, Ebecryl P115 und P116, und CN 386.

Die im Rahmen der Erfindung verwendeten Eindeckmittel enthalten das oder die Amin-Additive bevorzugt von etwa 0,1 bis etwa 20 %, insbesondere von etwa 0,5 bis etwa 10 %, und besonders bevorzugt von etwa 0,5 bis etwa 5 %.

Eine speziell an die jeweilige Eindeckzusammensetzung angepasste Menge an Amin-Additiv kann die Polymerisationszeit und Haltbarkeit der Zusammensetzung verbessern und eine unerwünschte Polymerisation vor der eigentlichen Anwendung der Zusammensetzung vermeiden. Daher offenbaren die genannten Inhaltsbereiche auch einzelne, konkrete %-Angaben in Schritten von 0,1 % innerhalb dieser Bereiche.

Als copolymerisierbare Thiol-Additive können auch kommerziell erhältliche Produkte eingesetzt werden. Als Beispiel seien genannt: Genomer* 7302 (Hersteller/Anbieter Rahn GmbH, Deutschland), Ebecryl LED 02 (Hersteller/Anbieter Allnex, Belgien), Dynasylan MTMO (CAS No. 4420-74-0) (Hersteller/Anbieter Evonik, Deutschland). Bevorzugt sind dabei Genomer* 7302 und Ebecryl LED 02.

Die im Rahmen der Erfindung verwendeten Eindeckmittel enthalten das oder die Thiol-Additive bevorzugt von etwa 0,1 bis etwa 20 %, insbesondere von etwa 0,5 bis etwa 10 %, und besonders bevorzugt von etwa 0,5 bis etwa 5 %.

Eine speziell an die jeweilige Eindeckzusammensetzung angepasste Menge an Thiol-Additiv kann die Polymerisationszeit und Haltbarkeit der Zusammensetzung verbessern und eine unerwünschte Polymerisation vor der eigentlichen Anwendung der Zusammensetzung vermeiden. Daher offenbaren die genannten Inhaltsbereiche auch einzelne, konkrete %-Angaben in Schritten von 0,1 % innerhalb dieser Bereiche.

Als copolymerisierbare Ether-Additive können auch kommerziell erhältliche Produkte eingesetzt werden. Als Beispiel seien genannt: Polyglycol P400E (CAS No. 25322-69-4) (Hersteller/Anbieter Dow Chemicals, USA), PolyTHF 250 (CAS No. 25190-06-1) oder PolyTHF 650 (CAS No. 25190-06-1) (Hersteller/Anbieter BASF, Deutschland), Polysorb PSA (CAS No. 652-67-5) (Hersteller/Anbieter ROQUETTE FRERES, Frankreich), Ebecryl 10501 (CAS No. 28961-43-5), Ebecryl P115 oder P116 (Hersteller/Anbieter Allnex, Belgien), (Hersteller/Anbieter Evonik, Deutschland). Bevorzugt sind dabei Ebecryl 10501, Ebecryl P115 und P116.

Die Eindeckmittel enthalten das oder die Ether-Additive bevorzugt von etwa 0,1 bis etwa 20 %, insbesondere von etwa 0,5 bis etwa 10 %, und besonders bevorzugt von etwa 0,5 bis etwa 5 %.

Eine speziell an die jeweilige Eindeckzusammensetzung angepasste Menge an Ether-Additiv kann die Polymerisationszeit und Haltbarkeit der Zusammensetzung verbessern und eine unerwünschte Polymerisation vor der eigentlichen Anwendung der Zusammensetzung vermeiden. Daher offenbaren die genannten Inhaltsbereiche auch einzelne, konkrete %-Angaben in Schritten von 0,1 % innerhalb dieser Bereiche.

Weiterhin wurde im Rahmen der Erfindungsentwicklung gefunden, dass, um das Problem der Hemmung der radikalischen Polymerisation durch molekularen Sauerstoff im Grundzustand, der eine unvollständige Härtung verursacht und im Allgemeinen zu einer verminderten mechanischen Leistung und klebrigen Oberflächen der erhaltenen Eindeckmittel führt, zu beheben, werden den betreffenden Zusammensetzungen Substanzen zugesetzt, die in der Lage sind vor und während der UV-Härtung an die Oberfläche zu migrieren. So wird eine Schutzbarriere zur Reduzierung des Sauerstoffkontakts an der Grenzschicht zwischen Polymer und Luft aufgebaut und die Bildung der reaktionsträgen Peroxyl-Radikale reduziert oder vollständig unterdrückt.

Geeignet als Sauerstoff-Barriere sind eine Vielzahl an oligomeren und polymeren Substanzen wie Acrylate, Urethane, Ester, Silicone, als auch Hybrid-Systeme wie Acrylmodifizierte Silicone, Thiol- oder Amin-modifizierte Silicone, als auch Thiol- oder Amin-modifizierte Acrylate, Urethane oder Ester. Die genannten Systeme verbessern gleichzeitig die Fließeigenschaften der Eindeckformulierung als sog. "Leveler".

Als copolymersierbare Additive zur Bildung der Sauerstoff-Barriere können auch kommerziell erhältliche Produkte eingesetzt werden. Als Beispiel seien genannt:
Ebecryl 350, Modaflow 9200 (CAS No. 26376-86-3), Modaflow Lambda (Hersteller/Anbieter: Allnex, Belgien), Dynasylan AMMO (CAS No. 13822-56-5), Dynasylan TRIAMO (CAS No. 35141-30-1), Dynasylan DAMO (CAS No. 1760-24-3), Dynasylan MTMO (CAS No. 4420-74-0), Dynasylan MEMO (CAS No. 2530-85-0) (Hersteller/Anbieter Evonik, Deutschland). Bevorzugt sind dabei Modaflow 9200, Modaflow Lambda und Dynasylan MTMO bzw. MEMO.

Die im Rahmen der Erfindung verwendeten Eindeckmittel enthalten das oder die Sauerstoff-Barriere-Additive bevorzugt von etwa 0,1 bis etwa 20 %, insbesondere von etwa 0,5 bis etwa 10 %, und besonders bevorzugt von etwa 0,5 bis etwa 5 %.

Eine speziell an die jeweilige Eindeckzusammensetzung angepasste Menge an Sauerstoff-Barriere-Additiv kann die Polymerisationszeit und Haltbarkeit der Zusammensetzung verbessern und eine unerwünschte Polymerisation vor der eigentlichen Anwendung der Zusammensetzung vermeiden. Daher offenbaren die genannten Inhaltsbereiche auch einzelne, konkrete %-Angaben in Schritten von 0,1 % innerhalb dieser Bereiche.

Solche angepassten Formulierungen der verwendeten Eindeckmittel, insbesondere bzgl. der Komponenten b) - e), lassen sich in Kenntnis der vorliegenden Erfindung durch einfache Routineversuche ermitteln.

Die Viskosität von Eindeckmitteln kann mit verschiedenen Methoden gemessen werden.

Bei UV-härtbaren Eindeckmitteln wird ein Fließkappen-System bevorzugt verwendet (nach DIN 53 21 1). Der bevorzugte Viskositätsbereich von UV-härtbaren Eindeckmitteln gemäß der vorliegenden Erfindung liegt zwischen 15 Sekunden und 90 Sekunden in einem DIN 4-Auslaufkappensystem bei 20°C. Das verwendete Eindeckmittel hat dort eine bevorzugte Viskosität im Bereich von 20 bis 70 s Auslaufzeit (bei 20°C), noch stärker bevorzugt 40-60 und in weiteren spezifischen Ausführungsformen 45, 50 und 55 Sekunden Fließzeit in dem genannten System (bei 20 °C). Dies sorgt einerseits für eine einfachere Handhabung und andererseits wird die Blasenbildung vermieden. Das Eindeckmittel ist leicht zu lagern und auch unter Anwendung üblicher Sicherheitsmaßnahmen in chemischen Labors einsetzbar.

Das verwendete Eindeckmittel enthält entweder keine oder nur eine geringe Menge an leichtflüchtigen Verbindungen und vermeidet daher die Anwendung besonderer Sicherheitsvorkehrungen.

Bei Bestrahlung mit UV-Licht härtet es sehr schnell und schrumpffrei aus. Nach dem Aushärten ist es vollkommen transparent und kann über einen langen Zeitraum von 1 bis 15 Jahren ohne Verfärbungen oder Rissbildung gelagert werden. Aufgrund seiner Viskosität ist es auch für Eindeckmaschinen vorteilhaft einsetzbar. Es ist möglich, eine eingedeckte Probe ohne Blasenbildung zu erhalten, und das Eindeckmedium konserviert die Proben, ohne ihre Struktur oder Farbe zu verändern. Weiterhin sind die eingedeckten Proben vor Feuchtigkeit, Sauerstoff, Tageslicht und UV-Licht und weiteren äußeren Einflüssen geschützt und die Proben werden so vor Degradation geschützt. Weiterhin weist das verwendete Eindeckmittel positive Polarisationseigenschaften auf und zeigt keine Polarisationsfarben oder -linien auf Eindeckdias und Deckgläsern.

Der Begriff Absorptionsmaximum (UV/VIS) eines Stoffes ist sein Absorptionsmaximum im Bereich von UV- und sichtbarem Licht. Das Absorptionsmaximum (UV/VIS) eines Stoffes bestimmt seine Farbe.

Transparente Substanzen haben ein Absorptionsmaximum (UV/VIS) von weniger als 380 nm, gelbe Substanzen ein Absorptionsmaximum von 440 nm. Stoffe, die ihr Absorptionsmaximum auch nach mehreren Jahren nicht wesentlich verändern, verändern ihre Farbe nicht und zeigen keine Vergilbung. Eine nicht wesentliche Änderung des Absorptionsmaximums liegt vor, wenn sich das Absorptionsmaximum innerhalb von drei Jahren um weniger als 30 nm ändert. In einer weiteren Ausführungsform zeichnet sich das verwendete Eindeckmittel dadurch aus, dass es nach dem Aushärten farblos ist, und der Unterschied im Absorptionsmaximum gemessen nach einem Tag nach dem Aushärten und genau drei Jahren nach dem Aushärten ist geringer ist als 30 nm.

Das Eindeckmittel weist daher auch nach längerer Lagerung keine oder nur eine geringe Anfärbewirkung auf und eignet sich daher auch vorteilhaft zum Einbetten von Proben, die mehrfach über einen längeren Zeitraum untersucht werden müssen.

Ein Eindeckmittel muss auch nach dem Aushärten einen bestimmten Brechungsindex aufweisen. Dieser Brechungsindex ist an das eingedeckte Gewebe sowie an das Mikroskopobjektiv, mit dem die Probe untersucht wird, anzupassen. Der Brechungsindex des Eindeckmittels kann durch seine chemische Zusammensetzung beeinflusst werden. Insbesondere durch Mischen verschiedener chemischer Verbindungen kann ein gewünschter Brechungsindex erreicht werden. Dem Fachmann sind Verfahren zur Messung und Bestimmung des Brechungsindex, beispielsweise unter Verwendung eines Refraktometers, bekannt. In speziellen Ausführungsformen der vorliegenden Erfindung liegt der Brechungsindex des Eindeckmediums nach dem Härten im Bereich von 1,3 bis 1,7.

Das Eindeckmittel kann nach Verfahren hergestellt werden, die dem Fachmann im Wesentlichen bekannt sind.

Beispielsweise kann das Eindeckmittel durch Mischen der einzelner Komponenten erhalten werden. Entweder können alle Komponenten miteinander vermischt werden oder es werden zwei Komponenten in einem ersten Schritt gemischt und alle anderen Komponenten können in einem oder mehreren Schritten zugegeben werden.

Das im Rahmen der Erfindung verwendete Eindeckmittel kann weitere Komponenten enthalten, beispielsweise inerte Lösungsmittel, Verdünnungsmittel, Indikatoren, Lichtschutzmittel, Antioxidantien, Pigmente oder Farbstoffe.

Das verwendete Eindeckmittel kann weiterhin wie jedes andere im Stand der Technik bekannte Eindeckmedium verwendet werden.

Biologische Proben, die mit dem verwendeten Eindeckmittel befestigt werden müssen, umfassen Zellen, Bakterien, Gewebeschnitte, Gewebeproben, Blut-, Plasma- oder Serumproben. Die Proben können entweder direkt eingedeckt oder vorher gefärbt werden. Die Färbeverfahren sind dem Fachmann im Wesentlichen bekannt und umfassen beispielsweise Hämatoxylin-Eosin-Färbung, Giemsa-Färbung, Gram-Färbung und Toluidin-Färbung. Auch moderne Verfahren mit Fluoreszenz-Markern oder immunhistochemischen Markierungsverfahren können in Kombination mit dem verwendeten Eindeckmittel verwendet werden. Das Eindeckmittel kann zur Befestigung von flachen Proben wie Zellen oder Gewebeschnitten oder zur Befestigung von dreidimensionalen Strukturen wie Geweben, Insekten, Pflanzen oder Teilen davon verwendet werden.

Das offenbarte Eindeckmittel kann mit jeder üblichen UV-Quelle, beispielsweise mit UV-Lampen oder UV-Härtungsgeräten, gehärtet werden.

Die Bestrahlungszeit hängt von der genauen Zusammensetzung des Eindeckmittels ab. Dem Fachmann ist bekannt, wie die optimale Bestrahlungszeit und - intensität zu ermitteln ist. Vorzugsweise werden UV-Lichtquellen mit einem Wellenlängenbereich von 220 bis 360 nm während 120 s zum Aushärten des Eindeckmittels verwendet.

Das im Rahmen der Erfindung verwendete Eindeckmedium härtet nach der UV-Bestrahlung innerhalb von 10 bis 120 s vorzugsweise innerhalb von 30 s aus.

Das offenbarte Eindeckmittel eignet sich auch zum Einbetten von fluoreszierenden und Fluoreszenz-gefärbten Proben.

In einer weiteren Ausführungsform enthält das Eindeckmittel eir Antibleichmittel wie BHT (Butylhydroxytoluol) (CAS No. 128-37-0), Irganox 1076 (Octadecyl 3-(3,5-di-tert-butyl-4-hydroxyphenyl)propionat) (CAS No. 2072-79-3), Irganox 1010 ( Pentaerythrittetrakis (3-(3,5-di-tert-butyl-4-hydroxyphenyl)propionat) (CAS No. 6683-19-8), Tinuvin 312 (N-(2-Ethoxyphenyl)-N'-(4-thylphenyl)-ethylendiamid) (CAS No. 23949-66-8), Tinuvin 1577 (2 -(4,6-Diphenyl-1,3,5-triazin-2-yl)-5-(hexyl)oxyphenol) (CAS No. 147315-50-2) und andere geeignete Mittel allein oder in Kombination davon, die ein Ausbleichen des Fluoreszenzfärbemittels in der Probe vermeiden.

Das UV-härtbare Eindeckmittel kann auch auf Deckglasfolien (wie Cellulosetriacetatfolien - oder TAC-Folien) verwendet werden, die weit verbreitet in Abdeckfolien verwendet werden.

Der entscheidende Vorteil der offenbarten Eindeckmittel besteht allerdings in ihrer Eignung für eine sog. Tauchapplikation und dem nachfolgenden Verzicht auf ein Deckglas oder eine Folie. Dazu wird der Objektträger mit der darauf befindlichen Probe in ein Gefäß, z.B. ein Becherglas oder Küvette, in dem sich das Eindeckmittel befindet, vollständig bis knapp unter den Beschriftungsbereich eingetaucht, wodurch der Objektträger von allen Seiten mit dem Eindeckmittel überzogen wird. Der Objektträger, der bevorzugt senkrecht in einer Haltevorrichtung platziert ist, die z.B. gleichzeitig auch mehrere Objektträger aufnehmen kann, wird nach einer kurzen Wartezeit aus dem Gefäß entnommen. Nach einer Abtropfzeit von z.B. ca. 60 s wird dann der Objektträger bzw. werden die Objektträger mit UV-Licht von z.B. 220 - 360 nm bestrahlt, ohne dass dafür die Objektträger aus der Haltevorrichtung entnommen werden müssen.

Das Abtropfen des überschüssigen Eindeckmittels wird durch leichtes Aufsetzen der schmalen Objektträgerkanten auf einem saugfähigen Fließ optimiert, sodass sich keine Schichtdickenunterschiede des Eindeckmittels auf dem Objektträger ausbilden.

Die Leistung der verwendeten UV-Lampen liegt bevorzugt zwischen 100 - 1500 Watt. Typischerweise kommen Lampen mit 250 Watt zum Einsatz. Es kann dabei mit ein, zwei oder drei Lampen aus verschiedenen Raumrichtungen gearbeitet werden.

Die Bestrahlung erfolgt vorzugsweise senkrecht zur breiten Kante der Objektträger, parallel zur Glasoberfläche. Der Abstand der Lampe(n) zur Objektträgerkante liegt im Bereich von bevorzugt 1 - 4 cm, idealerweise bei ca. 1,5 cm.

Die Bestrahlungszeit kann erfindungsgemäß bevorzugt zwischen 10 Sekunden und 300 Sekunden variieren. In typischen Formulierungen liegt sie bei ca. 60 Sekunden.

Danach ist der Objektträger für die vorzunehmenden mikroskopischen Untersuchungen einsatzfähig, ohne dass dazu die Verwendung eines Deckglases oder einer Abdeckfolie notwendig wäre. Die Effizienzsteigerung, Verfahrensvereinfachung und Kostensenkung, die mit dem erfindungsgemäßen Tauchverfahren verbunden sind, liegen auf der Hand. Nachfolgend wird die vorliegende Erfindung durch Ausführungsbeispiele näher erläutert, ohne dadurch beschränkt zu werden. Weiterhin sind die in der Beschreibung genannten Substanzen und Prozessparameter innerhalb weiter, für den Fachmann erkennbarer Grenzen, frei kombinierbar. Die daraus entstehenden speziellen Ausführungsformen oder (Unter-) Kombinationen sind ebenfalls von der vorliegenden Erfindung umfasst.

### Ausführungsbeispiele

### Beispiel 1

Zur Herstellung des verwendeten Eindeckmittels werden 91,32 % Ebecryl LEO 10501 (CAS No. 28961-43-5), 4,81 % Ebecryl P116 und 3,87 % Omnirad 1173 (CAS No. 7473-98-5) in einem Becherglas gemischt. Ein mit einer Gewebeprobe Melanom U314 A-Ki67-Mel versehener Objektträger wird 120 Sekunden vollständig in das Eindeckmittel eingetaucht, sodass der Objektträger vollständig von dem Eindeckmittel auf allen Seiten umhüllt wird. Danach wird der Objektträger in eine Haltevorrichtung überführt und zusammen mit anderen Objektträgern für ca. 60 s abtropfen lassen. Danach erfolgt eine gleichzeitige Bestrahlung aller Objektträger in der Haltevorrichtung mit Wellenlängen von 220 bis 580 nm.

Die Bestrahlung erfolgt mit UV-Lampen mit Hg-Spektrum der Firmen SubZero und Hönle (beide Deutschland) bei verschieden Abständen Lampe/Objektträger und bei verschiedenen Bestrahlungszeiten.

Die besten Ergebnisse wurden mit den folgenden Parameterkombinationen erzielt:

| Abstand Objektträger/Lampe (cm) | Bestrahlungszeit (s) |
|---|---|
| 5 | 300, 270, 240 und 210 |
| 4 | 210, 180 und 150 |
| 3 | 60 und 120 |
| 1,5 | 35 |

### Brechungsindex Beispiel 1: 1,503 (für Eindeckmittel)

### Beispiel 2

Zur Herstellung des verwendeten Eindeckmittels werden 90,5 % Ebecryl LEO 10501 (CAS No. 28961-43-5), 3,77 % Ebecryl LED 02, 1,89 % Modaflow 9200 (CAS No. 26376-86-3) und 3,84 % Omnirad 1173 (CAS No. 7473-98-5) in einem Becherglas gemischt. Ein mit einer Gewebeprobe Prostata U316 A-p63-CK5+ versehener Objektträger wird 120 Sekunden vollständig in das Eindeckmittel eingetaucht, sodass der Objektträger vollständig von dem Eindeckmittel auf allen Seiten umhüllt wird. Danach wird der Objektträger in eine Haltevorrichtung überführt und zusammen mit anderen Objektträgern für ca. 60 s abtropfen lassen. Danach erfolgt eine gleichzeitige Bestrahlung aller Objektträger in der Haltevorrichtung mit Wellenlängen von 220 bis 580 nm.

Die Bestrahlung erfolgt mit UV-Lampen mit Hg-Spektrum der Firmen SubZero und Hönle (beide Deutschland) bei verschieden Abständen Lampe/Objektträger und bei verschiedenen Bestrahlungszeiten.

Die besten Ergebnisse wurden mit den folgenden Parameterkombinationen erzielt:

| Abstand Objektträger/Lampe (cm) | Bestrahlungszeit (s) |
|---|---|
| 5 | 300, 270, 240 und 210 |
| 4 | 210, 180 und 150 |
| 3 | 60 und 120 |
| 1,5 | 35 |

### Brechungsindex Beispiel 2: 1,510 (für Eindeckmittel)

### Beispiel 3

Zur Herstellung des verwendeten Eindeckmittels werden 94,51 % Ebecryl LEO 10501 (CAS No. 28961-43-5), 0,99 % Ebecryl P116, 0,49 % Dynasylan MTMO ((3-Mercaptopropyl)trimethoxysilan, CAS No. 4420-74-0) und 4,01 % Omnirad 1173 (2-Hydroxy-2-methylpropiophenon, CAS No. 7473-98-5) in einem Becherglas gemischt. Ein mit einer Gewebeprobe Lunge HE versehener Objektträger wird 120 Sekunden vollständig in das Eindeckmittel eingetaucht, sodass der Objektträger vollständig von dem Eindeckmittel auf allen Seiten umhüllt wird. Danach wird der Objektträger in eine Haltevorrichtung überführt und zusammen mit anderen Objektträgern für ca. 60 s abtropfen lassen. Danach erfolgt eine gleichzeitige Bestrahlung aller Objektträger in der Haltevorrichtung mit Wellenlängen von 220 bis 580 nm.

Die Bestrahlung erfolgt mit UV-Lampen mit Hg-Spektrum der Firmen SubZero und Hönle (beide Deutschland) bei verschieden Abständen Lampe/Objektträger und bei verschiedenen Bestrahlungszeiten.

Die besten Ergebnisse wurden mit den folgenden Parameterkombinationen erzielt:

| Abstand Objektträger/Lampe (cm) | Bestrahlungszeit (s) |
|---|---|
| 5 | 300, 270, 240 und 210 |
| 4 | 210, 180 und 150 |
| 3 | 60 und 120 |
| 1,5 | 35 |

Brechungsindex Beispiel 3: 1,514 (für Eindeckmittel)

## Patentansprüche

1. Verwendung einer Zusammensetzung umfassend
a) ein kurzkettiges Acrylatoligomer, das mono- oder multifunktional sein kann,
b) ein reaktives Amin-Additiv oder/und
c) ein reaktives Thiol-Additiv oder/und
d) ein reaktives Ether-Additiv oder/und
e) ein Hybrid-Silicon Additiv und
f) einen Photopolymerisationsinitiator (Fotoinitiator) als Eindeckmittel in der Mikroskopie.

2. Verwendung nach Anspruch 1, **dadurch gekennzeichnet, dass** die Zusammensetzung neben den Komponenten a) und f) eine oder mehrere Komponenten b) bis e) aufweist.

3. Verwendung nach Anspruch 1 oder 2, **dadurch gekennzeichnet, dass** die Zusammensetzung die Komponenten c), d) und/oder e), bevorzugt d) und/oder e), aufweist.

4. Verwendung nach einem der Ansprüche 1 bis 3, **dadurch gekennzeichnet, dass** die Zusammensetzung eine oder zwei Komponenten b) bis e) aufweist.

5. Verwendung nach einem der Ansprüche 1 bis 4, **dadurch gekennzeichnet, dass** die Zusammensetzung ausschließlich aus den Komponenten a) bis f) besteht.

6. Verwendung nach einem der Ansprüche 1 bis 5, **dadurch gekennzeichnet, dass** die Zusammensetzung die Komponenten b) bis f) jeweils von 0,1-20 Gew-%, insbesondere von 0,5-10 Gew.-%, und besonders bevorzugt von 0,5-5 Gew.-% enthält.

7. Verwendung nach einem der Ansprüche 1 bis 6, **dadurch gekennzeichnet, dass** die Zusammensetzung die Komponente a) von 1-98 Gew.-%, insbesondere von 20-98 Gew.-%, und besonders bevorzugt von 90-98 Gew.-% enthält.

8. Verwendung nach einem der Ansprüche 1 bis 7, **dadurch gekennzeichnet, dass** die Komponenten a), b), c), d), e) und/oder f) aus mehreren Verbindungen des entsprechenden Typs bestehen.

9. Verwendung nach einem oder mehreren der Ansprüche 1 bis 8, **dadurch gekennzeichnet, dass** nach der Applikation der Zusammensetzung auf ein Probenabdeckglas oder eine Abdeckfolie verzichtet wird.

10. Verwendung nach einem oder mehreren der Ansprüche 1 bis 9, **dadurch gekennzeichnet, dass** die Applikation der Zusammensetzung in Form einer Tauchapplikation erfolgt.

11. Verfahren zur Probenpräparation für die Mikroskopie, **dadurch gekennzeichnet, dass** eine Zusammensetzung nach einem der Ansprüche 1 bis 8 verwendet wird.

12. Verfahren nach Anspruch 11, **dadurch gekennzeichnet, dass** nach der Applikation der Zusammensetzung auf ein Probenabdeckglas oder eine Abdeckfolie verzichtet wird.

13. Verfahren nach Anspruch 11 oder 12, **dadurch gekennzeichnet, dass** die Applikation der Zusammensetzung in Form einer Tauchapplikation erfolgt.

## Claims

1. Use of a composition comprising
a) a short-chain acrylate oligomer which may be mono- or multifunctional,
b) a reactive amine additive or/and
c) a reactive thiol additive or/and
d) a reactive ether additive or/and
e) a hybrid silicone additive and
f) a photopolymerization initiator (photoinitiator) as a capping agent in microscopy.

2. Use according to claim 1, **characterized in that** the composition comprises, in addition to components a) and f), one or more components b) to e).

3. Use according to claim 1 or 2, **characterized in that** the composition comprises the components c), d) and/or e), preferably d) and/or e).

4. Use according to one of claims 1 to 3, **characterized in that** the composition comprises one or two components b) to e).

5. Use according to any one of claims 1 to 4, **characterized in that** the composition consists exclusively of components a) to f).

6. Use according to one of claims 1 to 5, **characterized in that** the composition contains components b) to f) in each case from 0.1-20% by weight, in particular from 0.5-10% by weight, and particularly preferably from 0.5-5% by weight.

7. Use according to one of claims 1 to 6, **characterized in that** the composition contains component a) from 1-98% by weight, in particular from 20-98% by weight, and particularly preferably from 90-98% by weight.

8. Use according to one of claims 1 to 7, **characterized in that** components a), b), c), d), e) and/or f) consist of several compounds of the corresponding type.

9. Use according to one or more of claims 1 to 8, **characterized in that** a sample cover glass or a cover film is dispensed with after application of the composition.

10. Use according to one or more of claims 1 to 9, **characterized in that** the application of the composition takes the form of an immersion application.

11. Method for sample preparation for microscopy, **characterized in that** a composition according to one of claims 1 to 8 is used.

12. Method according to claim 11, **characterized in that** a sample cover glass or a cover film is dispensed with after application of the composition.

13. Method according to claim 11 or 12, **characterized in that** the application of the composition takes the form of an immersion application.

## Revendications

1. Utilisation d'une composition comprenant
a) un oligomère d'acrylate à chaîne courte, qui peut être monofonctionnel ou multifonctionnel,
b) un additif amine réactif ou/et
c) un additif thiol réactif ou/et
d) un additif éther réactif ou/et
e) un additif de silicone hybride ; et
f) un initiateur de photopolymérisation (photoinitiateur) comme agent de recouvrement en microscopie.

2. Utilisation selon la revendication 1, **caractérisée en ce que** la composition comprend, outre les composants a) et f), un ou plusieurs composants b) à e).

3. Utilisation selon la revendication 1 ou 2, **caractérisée en ce que** la composition comprend les composants c), d) et/ou e), de préférence d) et/ou e).

4. Utilisation selon l'une quelconque des revendications 1 à 3, **caractérisée en ce que** la composition comprend un ou deux composants b) à e).

5. Utilisation selon l'une quelconque des revendications 1 à 4, **caractérisée en ce que** la composition est constituée exclusivement des composants a) à f).

6. Utilisation selon l'une quelconque des revendications 1 à 5, **caractérisée en ce que** la composition contient les composants b) à f) à raison de 0,1 à 20 % en poids, en particulier de 0,5 à 10 % en poids, et de manière particulièrement préférée de 0,5 à 5 % en poids.

7. Utilisation selon l'une quelconque des revendications 1 à 6, **caractérisée en ce que** la composition contient le composant a) de 1 à 98 % en poids, en particulier de 20 à 98 % en poids, et plus préférentiellement de 90 à 98 % en poids.

8. Utilisation selon l'une quelconque des revendications 1 à 7, **caractérisée en ce que** les composants a), b), c), d), e) et/ou f) sont constitués de plusieurs composés du type correspondant.

9. Utilisation selon une ou plusieurs des revendications 1 à 8, **caractérisée en ce qu'**après l'application de la composition, on renonce à un verre de recouvrement d'échantillon ou à une feuille de recouvrement.

10. Utilisation selon une ou plusieurs des revendications 1 à 9, **caractérisée en ce que** l'application de la composition se fait sous forme d'une application par immersion.

11. Procédé de préparation d'échantillons pour la microscopie, **caractérisé en ce que** l'on utilise une composition selon l'une quelconque des revendications 1 à 8.

12. Procédé selon la revendication 11, **caractérisé en ce qu'**après l'application de la composition, on renonce à un verre de recouvrement d'échantillon ou à une feuille de recouvrement.

13. Procédé selon la revendication 11 ou 12, **caractérisé en ce que** l'application de la composition se fait sous forme d'une application par immersion.
